# EUROPÄISCHE PATENTANMELDUNG

(11) **EP 4 099 638 A1**
(43) Veröffentlichungstag der Anmeldung: **07.12.2022**
(21) Anmeldenummer: 21177464.1
(22) Anmeldetag: 02.06.2021
(51) Int. Cl.: H04L 12/26, H04L 12/24

(54) **NETZKNOTEN, SYSTEM UND VERFAHREN ZUR ERFASSUNG VON VERBINDUNGSINFORMATIONEN**

(71) Anmelder: Siemens Aktiengesellschaft, 80333 München (DE)
(72) Erfinder: Bode, Sebastian, 59229 Ahlen (DE)

(57) **Zusammenfassung**

Eine Kenntnis der Netzwerktopologie oder eines konkreten Verbindungszustands eines Netzknotens innerhalb des Netzwerks ist wichtig für eine Einschätzung, ob sicherheitsrelevante Aufgaben unter Beteiligung des fraglichen Netzknotens durchgeführt werden können. Die vorliegende Erfindung stellt Mittel bereit, welche eine Erfassung von Verbindungsinformationen zwischen zumindest zwei Netzknoten gestattet. Mit diesen Mitteln wird ein passives oder transparentes Gerät innerhalb einer Verbindung erkannt bzw. dessen Abwesenheit bestätigt. Aufgrund dieser Feststellung kann im Weiteren eine Entscheidung über einen weiteren Datenaustausch getroffen werden, welcher je nach Mittelbarkeit der Verbindung eher vorsichtig zu behandeln ist, oder - bei einer unmittelbaren Verbindung eher unbesorgter behandelt werden kann. Aus einer Kenntnis der konkreten Verbindungszustände eines Netzknotens kann unter Hinzunahme weiterer Verbindungszustände der im Netzwerk verbundenen Netzknoten schließlich eine Kenntnis der gesamten Netzwerktopologie aufgebaut werden.

## Beschreibung

Die Erfindung betrifft ein Netzknoten, ein System und ein Verfahren zur Erfassung von Verbindungsinformationen in einem paketorientierten Netzwerk.

Mit einer zunehmenden Implementierung cloudbasierter Architekturen in industriellen Fertigungsumgebungen halten auch in industriellen Geräten - also in intelligenten Feldgeräten, Sensoren, Aktoren und Steuerungseinheiten der Automatisierungstechnik sowie in Automatisierungssystemen selbst - Technologien Einzug, welche bislang einer servergestützten Datenverarbeitung vorbehalten waren. Auch ist eine Verlagerung von Rechenressourcen zu beobachten, durch welche ein stärkeres Gewicht auf Rechenoperationen »im Feld«, also in einer industriellen Feldebene, gelegt wird. In der Fachwelt wird diese Verlagerung auch als Edge Computing bezeichnet.

Im Zuge dieser Verlagerung von Rechenressourcen müssen zunehmend Aufgaben auf einer Ebene der Feldgeräte bewältigt werden, welche bisher höheren Leitebenen vorbehalten waren. Aufgrund einer steigenden Zahl solcher vernetzten Feldgeräte bzw. Netzknoten und der besonderen Bedingungen in der industriellen Feldebene sind die aus der Leitebene bekannten Lösungsansätze nicht unbedingt in die Feldebene übertragbar.

Zu den genannten besonderen Bedingungen in der industriellen Feldebene zählt insbesondere eine einfachere Zugänglichkeit der Feldgeräte im Vergleich zu Servern der höheren Leitebene, welche gewöhnlich in Serverräumen betrieben werden. Während der Zutritt zu Serverräumen üblicherweise protokolliert wird und lediglich einem beschränkten Personenkreis zugänglich ist, ist in der industriellen Feldebene ein demgegenüber schwer überschaubarer Personenkreis tätig, beispielsweise betriebseigenes Operator- und Wartungspersonal, aber auch betriebsfremdes Wartungs- und Servicepersonal, usw.

Zu den genannten besonderen Bedingungen in der industriellen Feldebene zählt auch ein sicherer Datenaustausch zwischen mehreren Feldgeräten bzw. Netzknoten. Zwar bieten kryptografische Verfahren auch in der Feldebene einen sehr guten Ansatz zur Gewährleistung einer Vertraulichkeit und Integrität des Datenaustauschs, allerdings kann die Authentizität der Daten nur gewährleistet werden, wenn die Gegenstelle einen überprüfbaren Identitätsnachweis bereitstellen kann.

Bekannte Ansätze zur Unterstützung eines solchen Identitätsnachweis umfassen eine Erzeugung von Schlüsselmaterial und ein Einbringen von Zertifikaten bei einer Herstellung und Kommissionierung des Feldgeräts bzw. Netzknotens. Bedingt durch die oben erläuterte Situation der Zugänglichkeit der Netzknoten sind die bekannten Ansätze jedoch meist nicht ausreichend, da der Netzknoten bestimmte Eigenschaften - beispielsweise ein Originalgerät zu sein oder eine nicht überschreibbare Seriennummer vorweisen zu können - zwar belegen oder sogar nachweisen kann. Der Netzknoten kann jedoch nicht seine derzeitige Position oder seine derzeitige konkrete Funktion innerhalb des Netzwerks in der industriellen Feldebene belegen.

Eine Kenntnis der Netzwerktopologie oder eines konkreten Verbindungszustands eines Netzknotens innerhalb des Netzwerks ist aber wichtig, insbesondere dann, wenn sicherheitsrelevante oder auch »safety critical« Aufgaben unter Beteiligung eines fraglichen Netzknotens durchgeführt werden müssen.

Die vorliegende Erfindung ist vor die Aufgabe gestellt, Mittel anzugeben, welche eine Erfassung von Verbindungsinformationen eines Netzknotens gestattet.

Die Aufgabe wird durch einen Netzknoten mit den Merkmalen des Patentanspruchs 1 gelöst. Der erfindungsgemäß zur Erfassung einer Verbindungsinformationen eingerichtete Netzknoten umfasst mindestens eine netzknoteninterne Netzwerkschnittstelle zur gegenseitigen Konfiguration mindestens einer Verbindungseigenschaft mit einer netzknotenextern verbundenen Netzwerkschnittstelle. Die Netzwerkschnittstelle des Netzknotens - also die netzknoteninterne Netzwerkschnittstelle - kann in kommunikativer Verbindung mit einer weiteren netzknotenexternen Netzwerkschnittstelle eines weiteren Netzknotens innerhalb des Netzwerks verbunden sein. Eine Verbindung mit netzknotenexternen Netzwerkschnittstellen löst eine bekannte gegenseitige Konfiguration von Verbindungseigenschaften aus, welche in der Fachwelt auch als »Auto Negotiation« bekannt ist. Eine erfindungsgemäße Inventarisierungseinheit erfasst mindestens eine solche Verbindungseigenschaft und ordnet dieser einen jeweiligen Zeitstempel zu. Die mit dem Zeitstempel versehene Verbindungseigenschaft wird in einer Verbindungsdatenhistorie hinterlegt, welche im einfachsten Fall als zeitlich angeordnete Liste oder auch als Datenbank organsiert ist. Eine erfindungsgemäße Auswertungseinheit wertet eine oder mehrere Verbindungsdatenhistorien aus und gibt eine Verbindungsinformation aus, welche Verbindungsart oder -modus des Netzknotens mit einem oder mehreren verbundenen Netzknoten angibt.

Der erfindungsgemäße Netzknoten kann insbesondere als Feldgerät ausgestaltet sein. Der erfindungsgemäße Netzknoten kann auch als ein allgemeines Gerät ausgestaltet sein, welches drahtlos oder drahtgebunden mit einem insbesondere paketorientierten Netzwerk verbunden ist.

Aus einer Kenntnis der konkreten Verbindungszustände eines Netzknotens kann unter Hinzunahme weiterer Verbindungszustände der im Netzwerk verbundenen Netzknoten schließlich eine Kenntnis der gesamten Netzwerktopologie aufgebaut werden. Über die der Erfindung gestellte Aufgabe einer Erfassung von Verbindungsinformationen zwischen zumindest zwei Netzknoten hinaus gestattet die Erfindung also weiterhin eine aus diesen von der Mehrzahl von Netzknoten zusammengeführten Verbindungsinformationen eine Erfassung einer netzwerkweiten Verbindungsinventarisierung bzw. Topologie.

Gemäß einem System mit den Merkmalen des Patentanspruchs 10 ist ein Netzknoten mit einer Mehrzahl netzknoteninterner Netzwerkschnittstellen zur gegenseitigen Konfiguration mindestens einer Verbindungseigenschaft mit einer netzknotenextern verbundenen Netzwerkschnittstelle vorgesehen. Weiterhin ist eine Inventarisierungseinheit zur Erfassung der mindestens einen Verbindungseigenschaft, zur Zuordnung eines jeweiligen Zeitstempels zu der erfassten Verbindungseigenschaft und zur Hinterlegung einer daraus gebildeter Verbindungsdatenhistorie vorgesehen. Das System umfasst des Weiteren eine Schnittstelle zu einer Auswertungseinheit, die Auswertungseinheit eingerichtet zur Akkumulierung und Auswertung mindestens einer Verbindungsdatenhistorie und zur Ausgabe von netzwerkbezogener Verbindungsinformationen. Die Auswertungseinheit kann dabei optional außerhalb des Systems liegen oder auch von diesem umfasst sein. Eine mögliche Ausgestaltung eines solchen Systems ist ein Netzwerk-Switch mit einer Mehrzahl an Netzwerkschnittstellen bzw. Ports, bei dem die Inventarisierungseinheit switch-intern, z.B. als erweitertes Modul der switch-internen Steuerungssoftware, zum Ablauf gebracht wird. Die Schnittstelle zu der z.B. außerhalb des Switches angeordneten Auswertungseinheit kann beispielsweise über eine der Mehrzahl an Netzwerkschnittstellen des Netzwerk-Switches gebildet sein.

Die Aufgabe wird weiterhin durch ein Verfahren mit den Merkmalen des Patentanspruchs 11 gelöst. Gemäß einem erfindungsgemäßen Verfahren zur Erfassung von Verbindungsinformationen in einem Netzwerksind folgende Schritte vorgesehen:
- gegenseitige Konfiguration mindestens einer Verbindungseigenschaft durch eine mit einer netzknotenexternen Netzwerkschnittstelle verbundenen netzknoteninternen Netzwerkschnittstelle;
- Erfassen der mindestens einen Verbindungseigenschaft, Zuordnung eines jeweiligen Zeitstempels zu der erfassten Verbindungseigenschaft und Hinterlegung einer daraus gebildeter Verbindungsdatenhistorie; und;
- Akkumulieren und Auswerten mindestens einer Verbindungsdatenhistorie und Ausgeben daraus ermittelter netzwerkbezogener Verbindungsinformationen.

Weitere Ausgestaltungen der Erfindung sind Gegenstand der abhängigen Patentansprüche.

Gemäß einer Fortbildung der Erfindung ist vorgesehen, den erfindungsgemäßen Netzknoten bzw. das erfindungsgemäße System so auszugestalten, dass die Erfassung der mindestens einen Verbindungseigenschaft bei einem erstmaligen Auftreten, einem wiederholten Auftreten, einem Erlöschen und/oder einer Änderung der mindestens einen Verbindungseigenschaft erfolgt. Diese Maßnahme gestattet eine zeitlich zuordenbare Verbindungsdatenhistorie, mit der Änderungen in den Verbindungsdaten in einen zeitlichen Rahmen gestellt werden können, um diese nachvollziehbar auszuwerten.

Gemäß einer Fortbildung der Erfindung ist vorgesehen, den erfindungsgemäßen Netzknoten bzw. das erfindungsgemäße System so auszugestalten, dass die Verbindungsinformation eine Angabe enthält, ob die netzknoteninterne Netzwerkschnittstelle mit der netzknotenexternen Netzwerkschnittstelle unmittelbar oder mittelbar verbunden ist. Eine unmittelbare Verbindung entspricht einer Direktverbindung über ein optisches oder galvanisches Patchkabel bzw. Verlegekabel. An einer direkten Verbindung sind auch passive Komponenten zur Herstellung der Verbindung z.B. Anschlussdosen, Patchpanels, etc. beteiligt. Eine mittelbare Verbindung ist demgegenüber dadurch gekennzeichnet, dass in der optischen oder galvanischen Verbindung zumindest eine aktive Einheit zwischengeschaltet ist, beispielsweise ein Switch, ein Router, ein Repeater, ein Signalverstärker bzw. Signal Shaper, eine signaloptische Komponente etc. Eine transparente Verbindung ist dadurch gekennzeichnet, dass in der optischen oder galvanischen Verbindung zumindest eine aktive Einheit, insbesondere ein Switch zwischengeschaltet ist. Im Sinne dieser Beschreibung wird eine transparente Verbindung als Spezialfall einer mittelbaren Verbindung erachtet.

Ein galvanisches Patchkabel oder Verlegkabel besteht üblicherweise aus einer Mehrdrahtverbindung bzw. Twisted Pair. Eine Überprüfung, ob eine unmittelbare Verbindung besteht, kann in Anwendung der erfindungsgemäßen Mittel in vorteilhafter Weise Angriffe aufdecken, bei denen ein Angreifer aktive Einheiten in eine unmittelbare, physische Verbindung zwischen dem Netzknoten und dem verbundenen Netzknoten zwischenschaltet, welche die zuvor unmittelbare Verbindung in eine mittelbare Verbindung verändert haben. Diese Änderung wird in höheren Schichten üblicherweise nicht bemerkt. Gemäß der Fortbildung der Erfindung kann eine solche Zustandsänderung in einer mittelbaren Verbindung detektiert werden.

Gemäß einer Fortbildung der Erfindung ist vorgesehen, den erfindungsgemäßen Netzknoten bzw. das erfindungsgemäße System so auszugestalten, dass die Prüfung auf eine mittelbare Verbindung ferner eine Prüfung auf eine Verbindung über einen transparenten Netzknoten umfasst. Eine Prüfung, ob die netzknoteninterne Netzwerkschnittstelle mit der netzknotenexternen Netzwerkschnittstelle mittelbar über eine »transparenten« Einheit verbunden ist bedeutet insbesondere, dass der Netzknoten mit einem verbundenen zweite Netzknoten nicht direkt verbunden ist, sondern dass der Netzknoten und der verbundene Netzknoten gemeinsam mit dem »transparenten« Netzknoten verbunden sind, also beispielsweise mit einem Switch. Mögliche Angreifer könnten aktive transparente Einheiten in eine physische Verbindung zwischen dem Netzknoten und dem verbundenen Netzknoten zwischenschalten. Transparent bedeutet dabei, dass diese Einheiten vorhandenen Überwachungsverfahren bzw. Intrusion Detection nicht erkannt werden. Derlei transparente Einheiten sind über eine herkömmliche LAN-Verbindung inline verbunden, können jedoch von Überwachungssystemen in höheren Schichten nicht identifiziert oder erkannt werden, da ihre Wirkung in höheren Schichten mit der eines passiven Patchkabels verglichen werden kann. Weiterhin besitzen transparente Einheiten üblicherweise auch keine MAC-Adresse oder geben diese zumindest nicht bekannt, so dass sie schon aus diesem Grund höheren Schichten unsichtbar bleiben.

Gemäß einer Alternative der Erfindung ist vorgesehen, den erfindungsgemäßen Netzknoten bzw. das erfindungsgemäße System so auszugestalten, dass die netzknoteninterne Netzwerkschnittstelle mit der netzknotenexternen Netzwerkschnittstelle mittels einer Mehrdrahtverbindung verbindbar ist. Diese galvanische Verbindung, beispielsweise über ein kupferbasiertes Patchkabel oder Anschlusskabel, gewährleistet eine Erfassung bzw. Messung der meisten Verbindungseigenschaften, insbesondere der Erfassung eines Spannungsimpulsprotokolls, welche z.B. auf einer mit einer oder mehreren optischen Fasern hergestellten Verbindung ohne weitere Maßnahmen nur schwer zu realisieren ist.

Gemäß einer Fortbildung der Erfindung ist vorgesehen, den erfindungsgemäßen Netzknoten bzw. das erfindungsgemäße System so auszugestalten, dass die Erfassung der mindestens einen Verbindungseigenschaft auf einer Sicherungsschicht bzw. Data-Link Layer und/oder auf einer Bitübertragungsschicht bzw. Physical Layer erfolgt. Eine Überwachung und Absicherung auf diesen Schichten entfaltet die erfindungsgemäßen Vorteile, gegenüber denen herkömmliche Überwachungsverfahren Manipulation nur in höheren Schichten der Verbindung erkennen.

Gemäß einer Fortbildung der Erfindung ist vorgesehen, den erfindungsgemäßen Netzknoten bzw. das erfindungsgemäße System so auszugestalten, dass die Erfassung der mindestens einen Verbindungseigenschaft mindestens umfasst:
- eine Erfassung eines Ethernet-Medientyps;
- eine Erfassung einer Leitungscodierung;
- eine Erfassung eines Spannungsimpulsprotokolls, insbesondere Link Pulse, Fast Link Pulse, Link Integrity Test Pulse und/oder Normal Link Pulse;
- eine Erfassung mindestens eines Verbindungskodes, insbesondere Link Code Word; und/oder;
- eine Erfassung bidirektionaler Verbindungseigenschaften, insbesondere Voll-Duplex oder Halb-Duplex.
Hierbei werden Zustandsänderungen auf der Bitübertragungsschicht bzw. Physical Layer erkannt, beispielsweise durch Erkennung einer vorhandenen (»Link Up«) oder unterbrochenen Verbindung (»Link Down«). Optional oder ergänzend wird der Ethernet-Medientyp, z.B. 10BASE-T, 100BASE-T4, 1000BASE-T etc., bestimmt.

Das erfindungsgemäße Verfahren gemäß dieser Ausgestaltung beinhaltet also eine zeitliche Erfassung des Zustandekommens der Verbindung oder der Unterbrechung einer Verbindung durch einen Zeitstempel, Übermittlung der jeweiligen mit einem Zeitstempel versehenen Verbindungseigenschaft an die Auswertungseinheit und ein dortiges Akkumulieren und Auswerten mindestens einer Verbindungsdatenhistorie unter Verwendung von mit Zeitstempel versehenen Verbindungseigenschaften von anderen Netzknoten. Die mit dem Zeitstempel versehene Verbindungseigenschaften können auf der zweiten Schicht ausgewertet werden. Insbesondere können die Paketumlaufzeiten bzw. die einzelnen richtungsabhängigen Laufzeiten ausgewertet werden.

Gemäß einer Fortbildung der Erfindung ist vorgesehen, den erfindungsgemäßen Netzknoten bzw. das erfindungsgemäße System so auszugestalten, dass bidirektionale Verbindungseigenschaften, also Halb-Duplex bzw. Voll-Duplex, oder auch Takt, automatische Aushandlung bzw. Auto Negotiation, etc. eingestellt werden. Weiterhin kann ein Abgleich der Verbindungseigenschaften über ein oder mehrere höhere Netzwerkprotokolle erfolgen. Insbesondere kann vorgesehen sein, dass die Verbindung mehrfach auf- und wieder abgebaut wird, wobei die Verbindungseigenschaften oder einzelne Parameter der Verbindungseigenschaften sich ändern oder geändert werden können.

Gemäß einer Fortbildung der Erfindung ist vorgesehen, den erfindungsgemäßen Netzknoten bzw. das erfindungsgemäße System so auszugestalten, dass die Erfassung der mindestens einen Verbindungseigenschaft wiederholt mit mehrfachem Auf- und Abbau einer Verbindung zwischen der netzknoteninternen Netzwerkschnittstelle und der verbundenen netzknotenexternen Netzwerkschnittstelle erfolgt.

Gemäß einer Fortbildung der Erfindung ist vorgesehen, den erfindungsgemäßen Netzknoten bzw. das erfindungsgemäße System so auszugestalten, dass die Auswertungseinheit zur Steuerung der Inventarisierungseinheit eingerichtet ist, um insbesondere einen Modus, eine Abfolge und einen Typ für die Erfassung der mindestens einen Verbindungseigenschaft zu steuern.

Im Folgenden werden weitere Ausführungsbeispiele und Vorteile der Erfindung anhand der Zeichnung näher erläutert. Dabei zeigen:
- Fig. 1:: eine schematische Strukturdarstellung eines Netzknotens gemäß einer Ausgestaltung der Erfindung; und;
- Fig. 2:: eine schematische Darstellung alternativer Verbindungstypen zwischen mehreren exemplarischen netzknoteninternen und netzknotenexternen Netzwerkschnittstellen.

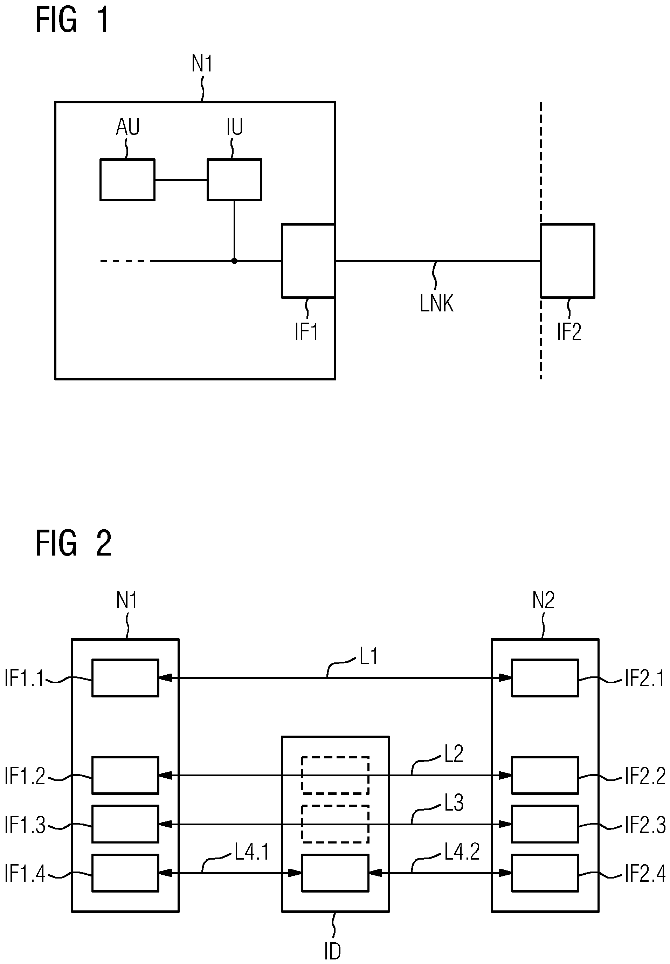

In Fig. 1 ist ein erfindungsgemäßer Netzknoten N1 dargestellt. Der Netzknoten N1 umfasst eine netzknoteninterne Netzwerkschnittstelle IF1 zur gegenseitigen Konfiguration mindestens einer Verbindungseigenschaft mit einer netzknotenextern verbundenen Netzwerkschnittstelle IF2.

Der Netzknoten N1 umfasst eine Inventarisierungseinheit IU zur netzknoteninternen Kommunikation mit der Netzwerkschnittstelle IF1 und zur Erfassung von Verbindungseigenschaften, welche von der Netzwerkschnittstelle IF1 bei der gegenseitigen Konfiguration angefallen sind. Den Verbindungseigenschaften - oder zumindest einer Verbindungseigenschaft - wird ein jeweiliger Zeitstempel zugeordnet. Die zumindest mit einem jeweiligen Zeitstempel versehenen Verbindungseigenschaften werden dann in einer daraus gebildeten Verbindungsdatenhistorie in einem - nicht dargestellten - Speicherbereich der Inventarisierungseinheit IU oder in einer alternativen - nicht dargestellten - Speichereinrichtung innerhalb oder außerhalb des Netzknotens N1 hinterlegt.

Die netzknoteninterne Netzwerkschnittstelle IF1 ist mit der netzknotenextern verbundenen Netzwerkschnittstelle N2 über eine Verbindung LNK verbunden. Die Verbindung LNK kann, wie in der Zeichnung dargestellt, eine unmittelbare Verbindung LNK sein. Alternativ kann diese auch eine mittelbare Verbindung LNK oder auch eine lediglich logische Verbindung LNK über ein - nicht dargestelltes - Netzwerk sein.

Der Netzknoten N1 umfasst eine Auswertungseinheit AU zur Auswertung mindestens einer Verbindungsdatenhistorie und zur Ausgabe einer Verbindungsinformation. Eine Auswertung mindestens einer Verbindungsdatenhistorie umfasst insbesondere auch eine Auswertung einer jeweiligen Verbindungsdatenhistorie von mehreren Netzknoten.

Im dargestellten Netzknoten N1 ist die Auswertungseinheit AU im Netzknoten N1 integriert. In einer alternativen Ausgestaltung ist auch eine beliebige Positionierung der Auswertungseinheit AU innerhalb des - nicht dargestellten - Netzwerks denkbar. Insbesondere kann eine zentralere Rolle der Auswertungseinheit AU auf einem - nicht dargestellten - dedizierten oder auch hybriden Netzknoten von Vorteil sein, etwa auf einem Feldcontroller.

Protokolle in paketorientierten Netzwerken können mit einiger Vorsicht einem OSI-Referenzmodell (Open Systems Interconnection) zugeordnet werden. Das OSI-Referenzmodell ist ein siebenschichtiges Modell, das von der ISO (International Standardization Organization) entwickelt wurde. Das OSI-Referenzmodell beschreibt, wie Netzwerkeinheiten und Netzknoten in Form von sieben in einer Hierarchie organisierten Funktionsebenen miteinander verbunden werden können und gibt auf jeder Ebene verfügbare Funktionen an.

Von der höchsten Ebene der Hierarchie bis zur niedrigsten Ebene der Hierarchie umfasst das OSI-Referenzmodell
- eine Anwendungsschicht oder Application Layer,
- eine Darstellungsschicht oder Presentation Layer,
- eine Sitzungsschicht oder Session Layer,
- eine Transportschicht oder Transport Layer,
- eine Vermittlungsschicht oder Network Layer,
- eine Sicherungsschicht oder Data-Link Layer, sowie,
- eine Bitübertragungsschicht oder Physical Layer.

Netzwerkarchitekturen wie Ethernet, ARCnet (Attached Resource Computer Network), Token Ring oder FDDI (Fiber Distributed Data Interface) umfassen die Sicherungs- und Bitübertragungsschicht und bilden die am häufigsten zum Einsatz kommenden Protokolle. Die Sicherungsschicht ist für Komposition und Senden sowie für Empfang und De-Komposition von Datenpaketen verantwortlich, wobei beide Vorgänge von der eingesetzten Netzwerkarchitektur abhängen. Die Sicherungsschicht ist üblicherweise in zwei Unterebenen unterteilt, nämlich eine LLC-Ebene (Logical-Link Control) oder Schicht 2b oberhalb einer darunterliegenden MAC-Ebene (Media-Access Control) oder auch Schicht 2a.

Es sind verschiedene Strukturen und Protokolle zum Implementieren der Sicherungs- und der Bitübertragungsschicht bekannt. Ein heute dominierender Standard Ethernet unter Verwendung von Kupferleitungen oder Glasfaserkabeln gewährleistet Datenübertragungsraten oberhalb von mehreren Gigabit pro Sekunde. Ein weiterer, lange bekannter Standard ATM (Asynchronous Transfer Mode), welcher ursprünglich als Schlüsseltechnik für Breitbandverbindungen oder Backbones in der Telekommunikation entwickelt wurde, erfährt auch heute noch einen Einsatz in der DSL-Übertragung (Digital Subscriber Line) mit Übertragungsraten bis zu einem Gbit/s über einfach verdrillte Kupferleitungen.

Fig. 2 zeigt eine schematische Darstellung alternativer Verbindungstypen zwischen einer netzknoteninternen und einer netzknotenexternen Netzwerkschnittstelle. Dabei ist zwischen einem exemplarischen ersten Netzknoten N1 und einem exemplarischen zweiten Netzknoten N2
- eine erste Verbindung L1 zwischen einer internen netzknoteninternen Netzwerkschnittstelle IF1.1 mit einer netzknotenextern verbundenen Netzwerkschnittstelle IF2.1 des zweiten Netzknotens N2;
- eine zweite Verbindung L2 zwischen einer internen netzknoteninternen Netzwerkschnittstelle IF1.2 mit einer netzknotenextern verbundenen Netzwerkschnittstelle IF2.2 des zweiten Netzknotens N2;
- eine dritte Verbindung L3 zwischen einer internen netzknoteninternen Netzwerkschnittstelle IF1.3 mit einer netzknotenextern verbundenen Netzwerkschnittstelle IF2.3 des zweiten Netzknotens N2; sowie
- eine vierte Verbindung L4.1, L4.2 zwischen einer internen netzknoteninternen Netzwerkschnittstelle IF1.4 mit einer netzknotenextern verbundenen Netzwerkschnittstelle IF2.4 des zweiten Netzknotens N2;
aufgebaut.

Die exemplarisch dargestellte erste Verbindung L1 symbolisiert eine unmittelbare Verbindung L1, welche beispielsweise über ein Patchkabel oder ein Verlegekabel hergestellt wird. Das Patchkabel oder das Verlegekabel ist je nach Beschaffenheit der mit der Verbindung L1 verbundenen Schnittstellen IF1.1, IF2.1 ein galvanisches, z.B. kupferbasiertes Patchkabel oder ein optisches Patchkabel, welches beispielsweise auf aus einer oder mehreren polymeroptischen Fasern oder Glasfasern besteht. An der direkten Verbindung sind gegebenenfalls auch weitere passive Komponenten zur Herstellung der Verbindung L1 beteiligt z.B. Anschlussdosen, Patchpanels, etc.

Die exemplarisch dargestellten zweiten und dritten Verbindung L2 und L3 sind dadurch geprägt, dass in der optischen oder galvanischen Verbindung zumindest eine aktive Einheit ID zwischengeschaltet ist, beispielsweise ein Signalverstärker, wobei die - strichliert symbolisierte - aktive Einheit ID den zeitlichen Signalverlauf auf der Verbindung L2,L3 im Wesentlichen unverändert belässt.

Die exemplarisch dargestellte vierte Verbindung L4.1, L4.2 ist eine transparente Verbindung L4.1, L4.2, welche beispielsweise über die aktive Einheit ID, hier z.B. ein Netzwerk-Switch, hergestellt wird. Um Unterschied zu den oben genannten mittelbaren Verbindungen L2,L3 verändert die aktive Einheit ID zur Unterhaltung der transparenten Verbindung L4.1, L4.2 den zeitlichen Signalverlauf auf der Verbindung L4.1, L4.2. In einem Netzwerk-Switch werden beispielsweise Datenpakete nach einem Empfang zwischengespeichert, um diese deren Header auf bestimmten Protokollebenen zu untersuchen und die Datenpakete dann an geeignete Schnittstellen bzw. Ports des Netzwerk-Switches weiterzuleiten. Der besagte Netzwerk-Switch als aktive Einheiten ID besitzen keine MAC-Adresse oder geben diese zumindest nicht bekannt, so dass sie schon aus diesem Grund in höheren Protokollebenen unsichtbar bleiben.

Eine Überprüfung, ob eine unmittelbare oder transparente Verbindung besteht, kann in Anwendung der erfindungsgemäßen Mittel in vorteilhafter Weise Angriffe aufdecken, bei denen ein Angreifer aktive Einheiten ID in eine unmittelbare, physische Verbindung zwischen dem Netzknoten und dem verbundenen Netzknoten zwischenschaltet, welche die zuvor unmittelbare Verbindung in eine mittelbare Verbindung verändert haben. Diese Änderung wird in höheren Schichten üblicherweise nicht bemerkt.

Die erfindungsgemäßen Mittel gestatten es, ein passives oder transparentes Gerät innerhalb einer Verbindung zu erkennen bzw. dessen Abwesenheit zu bestätigen. Aufgrund dieser Feststellung kann im Weiteren eine Entscheidung über einen weiteren Datenaustausch getroffen werden, welcher je nach Mittelbarkeit der Verbindung eher vorsichtig zu behandeln ist, oder, bei einer unmittelbaren Verbindung eher unbesorgter behandelt werden kann.

Insbesondere kann der Datenaustausch bei mittelbaren oder transparenten Verbindungen als authentischer und integritätsgeschützter Datenaustausch erfolgen. Hierzu erfolgt ein kryptografisch gesicherter Datenaustausch unter Anwendung Schlüsselmaterial. Das Schlüsselmaterial kann auf den Netzknoten N1, N2 vorzugsweise vorinstalliert sein. Alternativ kann ein Datenaustausch über einen vertrauenswürdigen Server erfolgen, welche den Netzknoten N1, N2 aufgrund ihres »Truststores« als vertrauenswürdig bekannt ist oder von diesen identifizierbar ist.

Insbesondere können bei unmittelbaren Verbindungen auch Zugangsdaten für eine Anwendung oder sonstige schützenswerte Daten ausgetauscht werden. Je nach Anwendung kann beispielsweise auch entschieden werden, dass auf kryptografische Schutzmaßnahmen verzichtet werden kann.

Durch das erfindungsgemäße Verfahren wird also vorteilhafterweise eine Topologieinformation, nämlich die Information, ob eine direkte Verbindung besteht, bereitgestellt. Auf dieser Basis können dann weitere Entscheidungen getroffen werden können.

Die Erfindung ermöglicht eine einfache Konfiguration einer industriellen Anlage bei gleichzeitiger hoher Sicherheit, nämlich einen Schutz gegen Angriffe von Dritten aufgrund von Nachlässigkeiten bei der Konfiguration.

## Patentansprüche

1. Netzknoten zur Erfassung einer Verbindungsinformationen, umfassend,
- mindestens eine netzknoteninterne Netzwerkschnittstelle (IF1) zur gegenseitigen Konfiguration mindestens einer Verbindungseigenschaft mit einer netzknotenextern verbundenen Netzwerkschnittstelle (IF2);
- eine Inventarisierungseinheit (IU) zur Erfassung der mindestens einen Verbindungseigenschaft, zur Zuordnung eines jeweiligen Zeitstempels zu der erfassten Verbindungseigenschaft und zur Hinterlegung einer daraus gebildeter Verbindungsdatenhistorie; und;
- eine Auswertungseinheit (AU) zur Auswertung mindestens einer Verbindungsdatenhistorie und zur Ausgabe einer Verbindungsinformation.

2. Netzknoten gemäß Patentanspruch 1, **dadurch gekennzeichnet, dass** die Erfassung der mindestens einen Verbindungseigenschaft bei einem erstmaligen Auftreten, einem wiederholten Auftreten, einem Erlöschen und/oder einer Änderung der mindestens einen Verbindungseigenschaft erfolgt.

3. Netzknoten gemäß einem der vorgenannten Patentansprüche, **dadurch gekennzeichnet, dass** die Verbindungsinformation eine Angabe enthält, ob die netzknoteninterne Netzwerkschnittstelle (IF1) mit der netzknotenexternen Netzwerkschnittstelle (IF2) unmittelbar oder mittelbar verbunden ist.

4. Netzknoten gemäß Patentanspruch 3, **dadurch gekennzeichnet, dass** die mittelbare Verbindung eine Verbindung über einen transparenten Netzknoten umfasst.

5. Netzknoten nach einem der vorgenannten Patentansprüche, **dadurch gekennzeichnet, dass** die netzknoteninterne Netzwerkschnittstelle (IF1) mit der netzknotenexternen Netzwerkschnittstelle (IF2) mittels einer Mehrdrahtverbindung verbunden ist.

6. Netzknoten gemäß einem der vorgenannten Patentansprüche, **dadurch gekennzeichnet, dass** die Erfassung der mindestens einen Verbindungseigenschaft auf einer Sicherungsschicht und/oder auf einer Bit-Übertragungsschicht erfolgt.

7. Netzknoten gemäß einem der vorgenannten Patentansprüche, **dadurch gekennzeichnet, dass** die Erfassung der mindestens einen Verbindungseigenschaft mindestens umfasst:
- eine Erfassung eines Ethernet-Medientyps;
- eine Erfassung einer Leitungscodierung;
- eine Erfassung eines Spannungsimpulsprotokolls, insbesondere Link Pulse, Fast Link Pulse, Link Integrity Test Pulse und/oder Normal Link Pulse;
- eine Erfassung mindestens eines Verbindungskodes, insbesondere Link Code Word; und/oder;
- eine Erfassung bidirektionaler Verbindungseigenschaften, insbesondere Voll-Duplex oder Halb-Duplex.

8. Netzknoten gemäß einem der vorgenannten Patentansprüche, **dadurch gekennzeichnet, dass** die Erfassung der mindestens einen Verbindungseigenschaft wiederholt mit mehrfachem Auf- und Abbau einer Verbindung zwischen der netzknoteninternen Netzwerkschnittstelle (IF1) und der verbundenen netzknotenexternen Netzwerkschnittstelle (IF2) erfolgt.

9. Netzknoten gemäß einem der vorgenannten Patentansprüche, wobei die Auswertungseinheit zur Steuerung der Inventarisierungseinheit eingerichtet ist, um insbesondere einen Modus, eine Abfolge und einen Typ für die Erfassung der mindestens einen Verbindungseigenschaft zu steuern.

10. System zur Erfassung von Verbindungsinformationen in einem Netzwerk, umfassend,
- einen Netzknoten (N1) mit einer Mehrzahl netzknoteninterner Netzwerkschnittstellen (IF1) zur gegenseitigen Konfiguration mindestens einer Verbindungseigenschaft mit einer netzknotenextern verbundenen Netzwerkschnittstelle (IF2);
- eine Inventarisierungseinheit (IU) zur Erfassung der mindestens einen Verbindungseigenschaft, zur Zuordnung eines jeweiligen Zeitstempels zu der erfassten Verbindungseigenschaft und zur Hinterlegung einer daraus gebildeter Verbindungsdatenhistorie; und;
- eine Schnittstelle zu einer Auswertungseinheit (AU), die Auswertungseinheit eingerichtet zur Akkumulierung und Auswertung mindestens einer Verbindungsdatenhistorie und zur Ausgabe von netzwerkbezogener Verbindungsinformationen.

11. Verfahren zur Erfassung von Verbindungsinformationen in einem Netzwerk, umfassend folgende Schritte:
- gegenseitige Konfiguration mindestens einer Verbindungseigenschaft durch eine mit einer netzknotenextern verbundenen netzknoteninternen Netzwerkschnittstelle;
- Erfassen der mindestens einen Verbindungseigenschaft, Zuordnung eines jeweiligen Zeitstempels zu der erfassten Verbindungseigenschaft und Hinterlegung einer daraus gebildeter Verbindungsdatenhistorie; und;
- Akkumulieren und Auswerten mindestens einer Verbindungsdatenhistorie und Ausgeben daraus ermittelter netzwerkbezogener Verbindungsinformationen.
